# DEMANDE DE BREVET EUROPEEN

(11) **EP 4 389 481 A1**
(43) Date de publication de la demande: **26.06.2024**
(21) Numéro de dépôt: 23217752.7
(22) Date de dépôt: 18.12.2023
(51) Int. Cl.: B60K 5/12

(54) **DISPOSITIF POUR FIXER DE FAÇON AMOVIBLE UN ORGANE FONCTIONNEL À UN ÉLÉMENT STRUCTUREL D'UN VÉHICULE**

(30) Priorité: 22.12.2022 FR 2214309
(71) Demandeur: AMPERE s.a.s, 92100 Boulogne-Billancourt (FR)
(72) Inventeur: GRENIER, Laurent, 78280 GUYANCOURT (FR); MOUSSI, Kamel, 78280 GUYANCOURT (FR)
(74) Mandataire: Renault Group

(57) **Abrégé**

Dispositif (1) pour fixer de façon amovible un organe fonctionnel (105) à un élément structurel (102) d'un véhicule, le dispositif comprenant un support (3), le support (3) comprenant un premier élément annulaire (5) destiné à être fixé à un élément structurel (102) d'un véhicule et un deuxième élément annulaire (7 ; 9) destiné à être fixé à un organe fonctionnel (105) d'un véhicule, le premier élément annulaire (5) s'étendant selon une première direction (D1), le deuxième élément annulaire (7 ; 9) s'étendant selon une deuxième direction (D2 ; D3), le support (3) comprenant en outre un premier bras (21 ; 23) reliant le premier élément annulaire (5) au deuxième élément annulaire (7 ; 9), la première direction (D1) n'étant pas alignée avec la deuxième direction (D2 ; D3).

## Description

L'invention concerne un dispositif pour fixer de façon amovible un organe fonctionnel à un élément structurel d'un véhicule. L'invention porte aussi sur un système comprenant un tel dispositif et un organe fonctionnel pour un véhicule. L'invention porte encore sur agencement comprenant un élément structurel pour un véhicule et un tel dispositif et/ou un tel système. L'invention porte également sur véhicule comprenant un tel dispositif et/ou un tel système et/ou un tel agencement.

Dans un véhicule, il apparaît important de prévoir un dispositif de fixation d'un organe fonctionnel à un élément structurel d'un véhicule.

Le but de l'invention est de fournir un dispositif pour fixer de façon amovible un organe fonctionnel à un élément structurel d'un véhicule améliorant les dispositifs connus de l'art antérieur. En particulier, l'invention permet de réaliser un dispositif qui soit simple et robuste et qui permette de minimiser le bruit acoustique et vibratoire.

Selon l'invention, un dispositif permet de fixer de façon amovible un organe fonctionnel à un élément structurel d'un véhicule. Le dispositif comprend un support. Le support comprend un premier élément annulaire destiné à être fixé à un élément structurel d'un véhicule et un deuxième élément annulaire destiné à être fixé à un organe fonctionnel d'un véhicule, le premier élément annulaire s'étendant selon une première direction, le deuxième élément annulaire s'étendant selon une deuxième direction, le support comprenant en outre un premier bras reliant le premier élément annulaire au deuxième élément annulaire, la première direction n'étant pas alignée avec la deuxième direction.

La première direction peut former un angle d'au moins 45° avec la deuxième direction, la première direction étant notamment perpendiculaire à la deuxième direction.

Le dispositif peut comprendre en outre un premier plot au moins partiellement en un matériau élastique, par exemple un premier silent bloc, disposé au moins partiellement à l'intérieur du premier élément annulaire, et un deuxième plot au moins partiellement en un matériau élastique, par exemple un deuxième silent bloc, disposé au moins partiellement à l'intérieur du deuxième élément annulaire.

Le premier plot peut comprendre une première ouverture destinée à recevoir une première vis et le deuxième plot peut comprendre une deuxième ouverture destinée à recevoir une deuxième vis.

Le support peut comprendre en outre un troisième élément annulaire destiné à être fixé audit organe fonctionnel d'un véhicule, le troisième élément annulaire s'étendant selon une troisième direction, et un deuxième bras peut relier le premier élément annulaire au troisième élément annulaire, la troisième direction n'étant pas alignée avec chacune des première et deuxième directions, la troisième direction formant notamment un angle d'au moins 45° avec chacune des première et deuxième directions, la troisième direction étant notamment perpendiculaire à la première direction et à la deuxième direction.

Le dispositif peut comprendre en outre un troisième plot au moins partiellement en un matériau élastique, par exemple un troisième silent bloc, disposé au moins partiellement à l'intérieur du troisième élément annulaire.

Le troisième plot peut comprendre une troisième ouverture destinée à recevoir une troisième vis.

Le deuxième bras peut être perpendiculaire ou sensiblement perpendiculaire au premier bras.

Selon l'invention, un système comprend un dispositif défini précédemment et un organe fonctionnel pour un véhicule, notamment un groupe motopropulseur comprenant au moins une pile à combustible, le premier élément annulaire étant destiné à être fixé à un élément structurel d'un véhicule par une première vis destinée à être insérée dans la première ouverture du premier plot, le deuxième élément annulaire étant fixé à l'organe fonctionnel par une deuxième vis insérée dans la deuxième ouverture du deuxième plot, et éventuellement le troisième élément annulaire étant fixé à l'organe fonctionnel par une troisième vis insérée dans la troisième ouverture du troisième plot.

Selon l'invention, un agencement comprend un élément structurel pour un véhicule et un dispositif défini précédemment et/ou un système défini précédemment, le premier élément annulaire étant fixé à l'élément structurel par une première vis insérée dans la première ouverture du premier plot.

Selon l'invention, un véhicule, notamment un véhicule automobile, comprend un dispositif défini précédemment et/ou un système défini précédemment et/ou un agencement défini précédemment.

Les dessins annexés représentent, à titre d'exemple, un mode de réalisation d'un dispositif selon l'invention.
La figure 1 représente un dispositif pour fixer de façon amovible un organe fonctionnel à un élément structurel d'un véhicule.
La figure 2 représente un système vis/écrou d'un agencement comprenant un dispositif pour fixer de façon amovible un organe fonctionnel à un élément structurel d'un véhicule.
La figure 3 est une vue partielle en perspective représentant un agencement comprenant un dispositif pour fixer de façon amovible un organe fonctionnel à un élément structurel d'un véhicule.
La figure 4 est une vue en perspective représentant un agencement comprenant un dispositif pour fixer de façon amovible un organe fonctionnel à un élément structurel d'un véhicule.
La figure 5 est une vue en perspective représentant un agencement comprenant un dispositif pour fixer de façon amovible un organe fonctionnel à un élément structurel d'un véhicule.

L'invention propose un dispositif pour fixer de façon amovible un organe fonctionnel à un élément structurel d'un véhicule, pour le montage d'un organe fonctionnel dans un véhicule. L'invention propose un dispositif présentant un encombrement réduit et permettant de filtrer des vibrations et/ou d'éviter des débattements d'un organe fonctionnel.

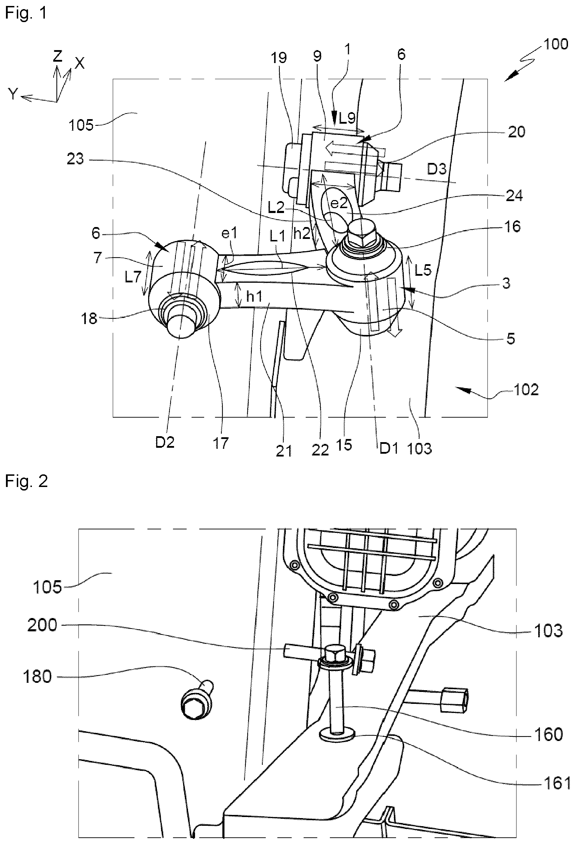

Un mode de réalisation d'un dispositif 1 pour fixer de façon amovible un organe fonctionnel 105 à un élément structurel 102 d'un véhicule 100 est décrit ci-après en référence aux figures 1 et 2.

Le véhicule 100 peut être un véhicule automobile.

Le dispositif 1 est destiné à réaliser un maintien, notamment solide, de l'organe fonctionnel 105 dans un véhicule 100, notamment dans un compartiment moteur. Le dispositif 1 est en outre destiné à réaliser une filtration acoustique et vibratoire. Le dispositif 1 est notamment destiné à éviter des vibrations dues au déplacement du véhicule et/ou dues à l'organe fonctionnel lui-même.

On se référera à un repère orthonormé direct XYZ, dans lequel l'axe X désigne la direction longitudinale avant-arrière du véhicule, orienté vers l'arrière, l'axe Y désigne la direction transversale du véhicule et est orienté de la gauche vers la droite du véhicule, la gauche et la droite étant définies selon le point de vue d'un conducteur du véhicule, l'axe Z désigne la direction verticale, et est orienté vers le haut, le véhicule reposant sur un sol horizontal.

Le dispositif 1 est notamment destiné à maintenir un organe fonctionnel 105 dans un véhicule 100 au moins dans la direction longitudinale et la direction verticale ou au moins dans la direction transversale et la direction verticale. Avantageusement, le dispositif 1 permet de maintenir un organe fonctionnel 105 dans un véhicule 100 dans la direction verticale et dans les directions longitudinale et transversale. Le dispositif 1 permet de maintenir un organe fonctionnel 105 dans un véhicule 100 lors de débattements vers l'avant et/ou l'arrière et vers la gauche et/ou la droite et vers le bas et/ou le haut dans un véhicule 100.

L'organe fonctionnel 105 peut être un groupe motopropulseur, notamment destiné à être agencé dans un compartiment moteur d'un véhicule, par exemple sur un berceau 104. Le groupe motopropulseur comprend par exemple au moins une pile à combustible 115 ou pile à hydrogène.

L'organe fonctionnel 105 est par exemple agencé à l'avant d'un véhicule 100.

L'élément structurel 102 comprend par exemple au moins un longeron 103. L'élément structurel 102 peut être tout élément de la caisse d'un véhicule ou du châssis d'un véhicule ou du soubassement d'un véhicule.

Avantageusement, l'élément structurel 102 est un élément rigide d'un véhicule 100, notamment un élément moins susceptible de se déformer par rapport à d'autres éléments d'un véhicule lors d'un déplacement du véhicule ou lors d'un éventuel choc.

Le dispositif 1 comprend un support 3.

Avantageusement, le support 3 est destiné à être fixé en partie supérieure ou en haut d'un organe fonctionnel 105. Ceci permet d'éviter un basculement supérieur de l'organe fonctionnel 105. De préférence, le support 3 est disposé le plus haut possible par rapport à l'organe fonctionnel 105.

Le support 3 est notamment destiné à éviter ou minimiser un déplacement de l'organe fonctionnel 105 vers l'avant lors d'un freinage et à éviter ou minimiser un déplacement de l'organe fonctionnel 105 vers l'arrière lors d'une accélération d'un véhicule 100.

Le support 3 peut comprendre au moins un matériau métallique ou un alliage d'au moins un matériau métallique. Le support 3 est par exemple au moins partiellement en acier ou en aluminium. De préférence, le support 3 est en aluminium. On pourra choisir pour le support 3 un ou des matériaux permettant de minimiser sa masse et de maximiser sa solidité.

Le support 3 comprend au moins un premier élément annulaire 5 et au moins un élément annulaire 6 destiné à être fixé à un organe fonctionnel 105 d'un véhicule 100. L'au moins un élément annulaire 6 comprend un deuxième élément annulaire 7 et/ou un troisième élément annulaire 9.

Le premier élément annulaire 5 est destiné à être fixé à un élément structurel 102 d'un véhicule 100. Le deuxième élément annulaire 7 est destiné à être fixé à un organe fonctionnel 105 d'un véhicule 100. Le troisième élément annulaire 9 est destiné à être fixé à un organe fonctionnel 105 d'un véhicule 100.

Le support 3 peut être un support bi-directionnel, comprenant un premier élément annulaire 5 destiné à être fixé à un élément structurel 102 d'un véhicule 100 et un élément annulaire 6 destiné à être fixé à un organe fonctionnel 105, notamment un deuxième élément annulaire 7 ou un troisième élément annulaire 9. Le support 3 peut être un support tri-directionnel, comprenant un premier élément annulaire 5 destiné à être fixé à un élément structurel 102 d'un véhicule 100 et deux éléments annulaires 6 destinés à être fixés à un organe fonctionnel 105, notamment un deuxième élément annulaire 7 et un troisième élément annulaire 9.

Le premier élément annulaire 5 s'étend selon une première direction D1 (axe du premier élément annulaire 5).

Le premier élément annulaire 5 s'étend sur une longueur L5 dans la première direction D1.

Le deuxième élément annulaire 7 s'étend selon une deuxième direction D2 (axe du deuxième élément annulaire 7).

Le deuxième élément annulaire 7 s'étend sur une longueur L7 dans la deuxième direction D2.

La première direction D1 n'est pas alignée avec la deuxième direction D2.

La première direction D1 forme notamment un angle d'au moins 45° avec la deuxième direction D2.

La première direction D1 forme par exemple avec la deuxième direction D2 un angle compris entre 45° et 90°.

La première direction D1 est notamment perpendiculaire à la deuxième direction D2.

La première direction D1 est par exemple parallèle ou sensiblement parallèle à l'axe Z. La deuxième direction D2 est par exemple parallèle ou sensiblement parallèle à l'axe X.

Le support 3 comprend en outre un premier bras 21. Le premier bras 21 relie le premier élément annulaire 5 au deuxième élément annulaire 7.

Le premier bras 21 est par exemple en acier ou en aluminium. De préférence, le premier bras 21 est en aluminium.

Le premier bras 21 peut être rectiligne ou droit. Le premier bras 21 peut être légèrement courbé. Le premier bras 21 peut être légèrement concave du côté opposé à l'organe fonctionnel 105.

Avantageusement, le premier bras 21 peut comprendre une cavité ou un évidement 22, notamment de section de forme oblongue. Il en résulte une masse réduite du support 3. En variante, le premier bras 21 peut ne pas comprendre de cavité ou être plein.

Au moins une dimension du premier bras 21 peut être minimisée, par exemple sa longueur L1 et/ou sa hauteur h1 et/ou son épaisseur e1.

Par longueur L1 du premier bras 21, on entend la direction principale d'élongation du premier bras 21, qui correspond ou correspond sensiblement à la distance entre le premier élément annulaire 5 et le deuxième élément annulaire 7. La longueur L1 du premier bras 21 peut être minimisée pour réduire l'encombrement du dispositif 1. On pourra notamment choisir la longueur L1 du premier bras 21 en fonction de la distance entre l'organe fonctionnel 105 et l'élément structurel 102 auquel on souhaite relier l'organe fonctionnel 105 via le support 1.

La longueur L1 est par exemple comprise entre environ 50 mm et environ 80 mm.

Par épaisseur e1 du premier bras 21, on entend la dimension du premier bras 21 selon la direction D2, qui est la direction principale du deuxième élément annulaire 7. L'épaisseur e1 du premier bras 21 est par exemple égale ou inférieure à la longueur L7 du deuxième élément annulaire 7. L'épaisseur e1 du premier bras 21 est par exemple égale ou inférieure au diamètre du premier élément annulaire 5.

Par hauteur h1 du premier bras 21, on entend la dimension du premier bras 21 selon la direction D1, qui est la direction principale du premier élément annulaire 5. La hauteur h1 du premier bras 21 est par exemple égale ou inférieure à la longueur L5 du premier élément annulaire 5. La hauteur h1 du premier bras 21 est par exemple égale ou inférieure au diamètre du deuxième élément annulaire 7.

Le support 3 peut comprendre un troisième élément annulaire 9.

Le troisième élément annulaire 9 est destiné à être fixé audit organe fonctionnel 105 d'un véhicule.

Le troisième élément annulaire 9 s'étend selon une troisième direction D3 (axe du troisième élément annulaire 9).

Le troisième élément annulaire 9 s'étend sur une longueur L9 dans la troisième direction D3.

La troisième direction D3 peut ne pas être alignée avec la première direction D1 et/ou la troisième direction D3 peut ne pas être alignée avec la deuxième direction D2.

La troisième direction D3 forme notamment un angle d'au moins 45° avec la première direction D1 et/ou la troisième direction D3 forme notamment un angle d'au moins 45° avec la deuxième direction D2.

La troisième direction D3 forme par exemple, avec la première direction D1, un angle compris entre 45° et 90° et/ou la troisième direction D3 forme par exemple, avec la deuxième direction D2, un angle compris entre 45° et 90°.

La troisième direction D3 est notamment perpendiculaire à la première direction D1 et/ou à la deuxième direction D2.

La troisième direction D3 est par exemple parallèle ou sensiblement parallèle à l'axe Y.

Le support 3 peut comprendre en outre un deuxième bras 23. Le deuxième bras 23 relie le premier élément annulaire 5 au troisième élément annulaire 9.

Le deuxième bras 23 est par exemple en acier ou en aluminium. De préférence, le deuxième bras 23 est en aluminium.

Le deuxième bras 23 peut être rectiligne ou droit. Le deuxième bras 23 peut être légèrement courbé. Le deuxième bras 23 peut être légèrement concave du côté opposé à l'organe fonctionnel 105.

Le deuxième bras 23 est notamment perpendiculaire ou sensiblement perpendiculaire au premier bras 21.

Avantageusement, le deuxième bras 23 peut comprendre une cavité ou un évidement 24, notamment de section de forme oblongue. Il en résulte une masse réduite du support 3. En variante, le premier bras 23 peut ne pas comprendre de cavité ou être plein.

Au moins une dimension du deuxième bras 23 peut être minimisée, par exemple sa longueur L2 et/ou sa hauteur h2 et/ou son épaisseur e2.

Par longueur L2 du deuxième bras 23, on entend la direction principale d'élongation du deuxième bras 23, qui correspond ou correspond sensiblement à la distance entre le premier élément annulaire 5 et le troisième élément annulaire 9. La longueur L2 du deuxième bras 23 peut être minimisée pour réduire l'encombrement du dispositif 1. On pourra notamment choisir la longueur L2 du deuxième bras 23 en fonction de la distance entre l'organe fonctionnel 105 et l'élément structurel 102 auquel on souhaite relier l'organe fonctionnel 105 via le support 1.

La longueur L2 est par exemple comprise entre 40 mm et 80 mm.

Par épaisseur e2 du deuxième bras 23, on entend la dimension du deuxième bras 23 selon la direction D3, qui est la direction principale du troisième élément annulaire 9. L'épaisseur e2 du deuxième bras 23 est par exemple égale ou inférieure à la longueur L9 du troisième élément annulaire 9. L'épaisseur e2 du deuxième bras 23 est par exemple égale ou inférieure au diamètre du premier élément annulaire 5.

Par hauteur h2 du deuxième bras 23, on entend la dimension du deuxième bras 23 selon la direction D1, qui est la direction principale du premier élément annulaire 5. La hauteur h2 du deuxième bras 23 est par exemple égale ou inférieure à la longueur L5 du premier élément annulaire 5. La hauteur h2 du deuxième bras 23 est par exemple égale ou inférieure au diamètre du troisième élément annulaire 9.

Le premier bras 21 peut être orienté parallèlement ou sensiblement parallèlement à la troisième direction D3. Le premier bras 21 est par exemple parallèle ou sensiblement parallèle à l'axe Y.

Le deuxième bras 23 peut être orienté parallèlement ou sensiblement parallèlement à la deuxième direction D2. Le deuxième bras 23 est par exemple parallèle ou sensiblement parallèle à l'axe X.

Le dispositif 1 peut comprendre un premier plot 15 et un deuxième plot 17 et/ou un troisième plot 19.

Le premier plot 15 est par exemple au moins partiellement en un matériau élastique. Le deuxième plot 17 est par exemple au moins partiellement en un matériau élastique.

Le premier plot 15 est notamment disposé au moins partiellement à l'intérieur du premier élément annulaire 5. Le premier plot 15 est par exemple fixé au premier élément annulaire 5 du support 3, notamment par collage.

Le deuxième plot 17 est disposé au moins partiellement à l'intérieur du deuxième élément annulaire 7. Le deuxième plot 17 est par exemple fixé au deuxième élément annulaire 7 du support 3, notamment par collage.

Le premier plot 15 est par exemple au moins partiellement en caoutchouc. Le deuxième plot 17 est par exemple au moins partiellement en caoutchouc.

Le premier plot 15 et le deuxième plot 17 sont notamment destinés à absorber ou filtrer du bruit acoustique et vibratoire et/ou à éviter des débattements de l'organe fonctionnel 105.

Le premier plot 15 est par exemple un premier silent bloc. Le deuxième plot 17 est par exemple un deuxième silent bloc.

Le premier plot 15 peut comprendre une première ouverture 16. La première ouverture 16 est notamment destinée à recevoir une première vis 160.

La première ouverture 16 est par exemple de forme cylindrique. La première ouverture 16 est notamment configurée pour recevoir une première vis 160.

La première ouverture 16 s'étend notamment sur toute la longueur du premier plot 15, par exemple au centre du premier plot 15. Par longueur du premier plot 15, on entend une dimension parallèle ou sensiblement parallèle à la première direction D1.

De façon optionnelle, le dispositif 1 peut comprendre un premier insert disposé dans la première ouverture 16. Le premier insert est destiné à être interposé entre le premier plot 15 et une première vis 160. Le premier insert est destiné à éviter que la première vis 160 ne comprime le premier plot 15. Le premier insert est par exemple en acier.

Le deuxième plot 17 peut comprendre une deuxième ouverture 18. La deuxième ouverture 18 est notamment destinée à recevoir une deuxième vis 180.

La deuxième ouverture 18 est par exemple de forme cylindrique. La deuxième ouverture 18 est notamment configurée pour recevoir une première vis 180.

La deuxième ouverture 18 s'étend notamment sur toute la longueur du deuxième plot 17, par exemple au centre du deuxième plot 17. Par longueur du deuxième plot 17, on entend une dimension parallèle ou sensiblement parallèle à la deuxième direction D2.

De façon optionnelle, le dispositif 1 peut comprendre un deuxième insert disposé dans la deuxième ouverture 18. Le deuxième insert est destiné à être interposé entre le deuxième plot 17 et une deuxième vis 180. Le deuxième insert est destiné à éviter que la deuxième vis 180 ne comprime le deuxième plot 17. Le deuxième insert est par exemple en acier.

Le dispositif 1 peut comprendre un troisième plot 19 au moins partiellement en un matériau élastique.

Le troisième plot 19 est destiné à absorber ou filtrer du bruit acoustique et vibratoire et/ou à éviter des débattements de l'organe fonctionnel 105.

Le troisième plot 19 est par exemple au moins partiellement en caoutchouc.

Le troisième plot 19 est notamment disposé au moins partiellement à l'intérieur du troisième élément annulaire 9. Le troisième plot 19 est par exemple fixé au troisième élément annulaire 9 du support 3, notamment par collage.

Le troisième plot 19 est par exemple un troisième silent bloc.

Le troisième plot 19 peut comprendre une troisième ouverture 20. La troisième ouverture 20 est notamment destinée à recevoir une troisième vis 200.

La troisième ouverture 20 est par exemple de forme cylindrique. La troisième ouverture 20 est notamment configurée pour recevoir une troisième vis 200.

La troisième ouverture 20 s'étend notamment sur toute la longueur du troisième plot 19, par exemple au centre du troisième plot 19. Par longueur du troisième plot 19, on entend une dimension parallèle ou sensiblement parallèle à la troisième direction D3.

De façon optionnelle, le dispositif 1 peut comprendre un troisième insert disposé dans la troisième ouverture 20. Le troisième insert est destiné à être interposé entre le troisième plot 19 et une troisième vis 200. Le troisième insert est destiné à éviter que la troisième vis 200 ne comprime le troisième plot 19. Le troisième insert est par exemple en acier.

Le dispositif 1 permet de maintenir un organe fonctionnel 105 suivant au moins deux directions dans un véhicule 100, notamment suivant l'axe X et l'axe Z ou suivant l'axe Y et l'axe Z, dans le cas où le support 3 comprend un premier élément annulaire destiné à être fixé à un élément structurel d'un véhicule et un deuxième élément annulaire destiné à être fixé à un organe fonctionnel d'un véhicule.

Avantageusement, le dispositif 1 permet de maintenir un organe fonctionnel 105 suivant trois directions dans un véhicule 100, notamment suivant l'axe X, l'axe Y et l'axe Z, dans le cas où le support 3 comprend un premier élément annulaire destiné à être fixé à un élément structurel d'un véhicule et un deuxième et un troisième éléments annulaires destinés à être fixés à un organe fonctionnel d'un véhicule.

Avantageusement, le support 3 comprenant le premier élément annulaire 5 et le deuxième élément annulaire 7 et/ou le troisième élément annulaire 9, ainsi que le premier bras 21 et/ou le deuxième bras 23, se présente sous la forme d'une seule pièce mécanique. Il en résulte une mise en place simple d'un dispositif 1 dans un véhicule 100, notamment pour le montage et/ou le démontage d'un organe fonctionnel 105 dans un véhicule 100.

De façon optionnelle, le dispositif 1 peut comprendre en outre au moins un moyen de rotation d'au moins un des premier, deuxième et troisième plots 15, 17, 19. L'au moins un moyen de rotation est destiné à permettre une rotation d'au moins un des premier, deuxième et troisième plots 15, 17, 19 par rapport à une vis correspondante 160, 180, 200. Le dispositif 1 peut comprendre un premier moyen de rotation pour permettre une rotation du premier plot 15 par rapport à une vis 160. Le dispositif 1 peut comprendre un deuxième moyen de rotation pour permettre une rotation du deuxième plot 17 par rapport à une vis 180. Le dispositif 1 peut comprendre un troisième moyen de rotation pour permettre une rotation du troisième plot 19 par rapport à une vis 200. L'au moins un moyen de rotation est destiné à conférer un degré de liberté en rotation à au moins un des premier, deuxième et troisième plots 15, 17, 19. Pour cela, le premier plot 15 peut être constitué de deux tubes imbriqués l'un dans l'autre, un premier tube étant fixé au premier élément annulaire 5, par exemple par collage, et un deuxième tube, destiné à recevoir une vis 160, étant mobile en rotation à l'intérieur du premier tube. Le deuxième plot 17 peut être constitué de deux tubes imbriqués l'un dans l'autre, un premier tube étant fixé au deuxième élément annulaire 7, par exemple par collage, et un deuxième tube, destiné à recevoir une vis 180, étant mobile en rotation à l'intérieur du premier tube. Le troisième plot 19 peut être constitué de deux tubes imbriqués l'un dans l'autre, un premier tube étant fixé au troisième élément annulaire 9, par exemple par collage, et un deuxième tube, destiné à recevoir une vis 200, étant mobile en rotation à l'intérieur du premier tube.

Pour l'au moins un premier, deuxième et troisième plots 15, 17, 19, le premier tube est destiné à éviter des débattements de l'organe fonctionnel 105. Pour l'au moins un premier, deuxième et troisième plots 15, 17, 19, le premier tube peut être en caoutchouc et le deuxième tube peut être en un autre matériau. Il en résulte que l'épaisseur du premier tube en caoutchouc peut être minimisée.

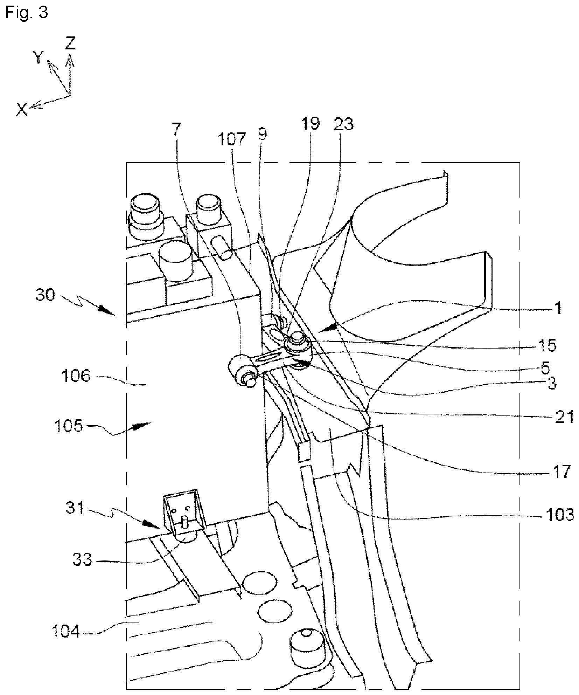

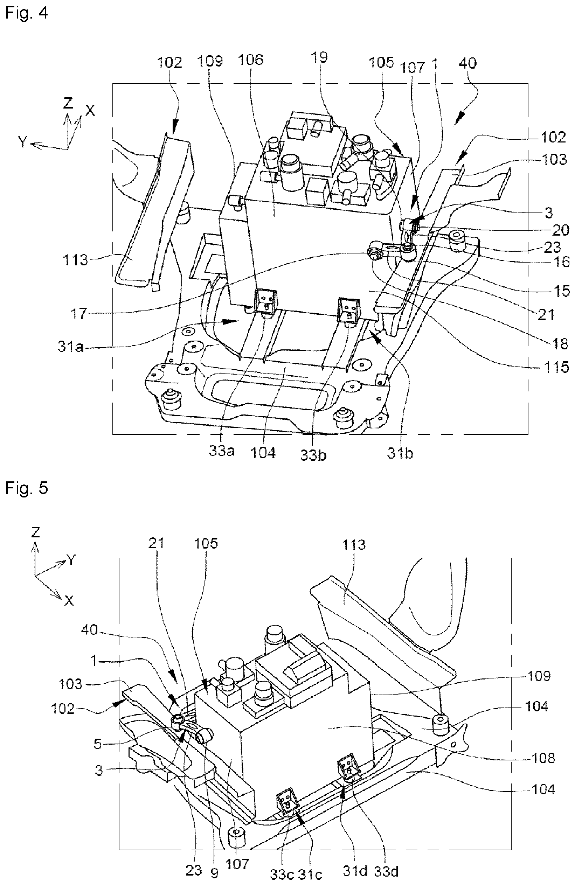

Un système 30 comprenant au moins un dispositif 1 du type de celui décrit ci-dessus et un organe fonctionnel 105 pour un véhicule 100, notamment un groupe motopropulseur comprenant au moins une pile à combustible 115, est décrit ci-après en référence aux figures 3 à 5.

Le deuxième élément annulaire 7 du support 3 peut être fixé à l'organe fonctionnel 105, notamment par une deuxième vis 180 insérée dans la deuxième ouverture 18 du deuxième plot 17. La deuxième vis 180 est notamment fixée à l'organe fonctionnel 105, notamment à un boîtier de l'organe fonctionnel 105, par exemple en aluminium, par l'intermédiaire d'un écrou.

Le deuxième élément annulaire 7 du support 3 peut être fixé à une première face 106 de l'organe fonctionnel 105. La première face 106 s'étend par exemple dans un plan parallèle au plan (Y,Z).

Avantageusement, le deuxième élément annulaire 7 est fixé en partie supérieure ou en haut de l'organe fonctionnel 105. Ceci permet d'éviter un basculement supérieur de l'organe fonctionnel 105.

Le premier élément annulaire 5 du support 3 est destiné à être fixé à un élément structurel 102 d'un véhicule 100, notamment par une première vis 160 destinée à être insérée dans la première ouverture 16 du premier plot 15. La première vis 160 est notamment fixée à élément structurel 102, notamment à un longeron 103, par l'intermédiaire d'un écrou 161. L'écrou 161 est par exemple soudé ou fixé par sertissage au longeron 103.

Le troisième élément annulaire 9 peut être fixé à l'organe fonctionnel 105, notamment par une troisième vis 200 insérée dans la troisième ouverture 20 du troisième plot 19. La troisième vis 200 est notamment fixée à l'organe fonctionnel 105, notamment à un boîtier de l'organe fonctionnel 105, par exemple en aluminium, par l'intermédiaire d'un écrou.

Le troisième élément annulaire 9 du support 3 peut être fixé à une deuxième face 107 de l'organe fonctionnel 105. La deuxième face 107 s'étend par exemple dans un plan parallèle au plan (X, Z).

Avantageusement, le troisième élément annulaire 9 est fixé en partie supérieure ou en haut de l'organe fonctionnel 105. Ceci permet d'éviter un basculement supérieur de l'organe fonctionnel 105.

L'organe fonctionnel 105 est par exemple destiné à être agencé et maintenu sur un berceau 104 d'un véhicule 100.

L'organe fonctionnel 105 est notamment destiné à être posé sur le berceau 104 par l'intermédiaire d'au moins une pièce élastique 33.

Le système 30 peut comprendre au moins un moyen de fixation 31 pour maintenir l'organe fonctionnel 105 sur une partie structurelle d'un véhicule 100, notamment sur un berceau 104. L'au moins un moyen de fixation 31 est destiné à obtenir une assise adéquate de l'organe fonctionnel 105 sur un berceau 104.

Le berceau 104 est par exemple agencé en-dessous du longeron 103 dans un véhicule 100.

L'au moins un moyen de fixation 31 peut comprendre une pièce élastique 33 destinée à filtrer ou absorber du bruit, notamment acoustique, ou des vibrations, notamment acoustiques, notamment lorsque le véhicule est en mouvement.

Le système 30 comprend par exemple au moins un moyen de fixation 31a, 31b pour relier la première face 106 de l'organe fonctionnel 105 au berceau 104. Le système 30 comprend par exemple un premier moyen de fixation 31a et un deuxième moyen de fixation 31b pour relier la première face 106 de l'organe fonctionnel 105 au berceau 104, les premier et deuxième moyens de fixation 31a, 31b comprenant respectivement une première pièce élastique 33a et une deuxième pièce élastique 33b.

Le système 30 comprend par exemple au moins un moyen de fixation 31c, 31d pour relier une troisième face 108 de l'organe fonctionnel 105 au berceau 104. La troisième face 108 de l'organe fonctionnel 105 est notamment opposée à la première face 106. Le système 30 comprend par exemple un troisième moyen de fixation 31c et un quatrième moyen de fixation 31d pour relier la troisième face 108 de l'organe fonctionnel 105 au berceau 104, les troisième et quatrième moyens de fixation 31c, 31d comprenant respectivement une troisième pièce élastique 33c et une quatrième pièce élastique 33d.

Le système 30 peut comprendre plusieurs dispositifs 1 du type de celui décrit ci-dessus pour fixer de façon amovible un organe fonctionnel 105 à un élément structurel 102 d'un véhicule. Il en résulte une répartition des efforts entre les différents dispositifs 1.

Le système 30 peut comprendre un dispositif 1 destiné à relier l'organe fonctionnel 105 à un longeron 103 et un autre dispositif 1 destiné à relier l'organe fonctionnel 105 à un longeron 133. Le longeron 133 est par exemple parallèle au longeron 103. L'organe fonctionnel 105 est par exemple agencé entre le longeron 103 et le longeron 133, notamment au-dessus d'un berceau 104.

L'autre dispositif 1 peut comprendre un autre support 3 comprenant un premier élément annulaire destiné à être fixé au longeron 133 et au moins un élément annulaire destiné à être fixé à un organe fonctionnel 105 d'un véhicule, par exemple un deuxième élément annulaire destiné à être fixé à la troisième face 108 d'un organe fonctionnel 105 et/ou un troisième élément annulaire destiné à être fixé à la quatrième face 109 d'un organe fonctionnel 105. La quatrième face 109 de l'organe fonctionnel 105 est opposée à la deuxième face 107. L'autre dispositif 1 est par exemple disposé à un emplacement opposé à l'emplacement du dispositif 1 selon une diagonale de l'organe fonctionnel 105.

L'autre dispositif 1 peut comprendre un autre support 3 comprenant un premier élément annulaire destiné à être fixé au longeron 133 et au moins un élément annulaire destiné à être fixé à un organe fonctionnel 105 d'un véhicule, par exemple un deuxième élément annulaire destiné à être fixé à la première face 106 d'un organe fonctionnel 105 et/ou un troisième élément annulaire destiné à être fixé à la quatrième face 109 d'un organe fonctionnel 105. L'autre dispositif 1 est par exemple disposé à un emplacement opposé à l'emplacement du dispositif 1 selon la longueur de l'organe fonctionnel 105, l'organe fonctionnel 105 présentant par exemple une forme parallélépipédique ou sensiblement parallélépipédique de longueur notamment parallèle à l'axe Y et de de largeur notamment parallèle à l'axe X.

De façon optionnelle, le système 30 peut comprendre en outre une biellette de reprise de couple destinée à relier l'organe fonctionnel 105 à un élément structurel 102 d'un véhicule 100. Une biellette de reprise de couple est destinée à éviter des débattements de l'organe fonctionnel 105.

L'invention concerne en outre un agencement 40 comprenant un élément structurel 102 pour un véhicule 100 et un dispositif 1 du type de celui décrit précédemment et/ou un système 30 du type de celui décrit précédemment, le premier élément annulaire 5 étant fixé à l'élément structurel 102, notamment à un longeron 103, par une première vis 160 insérée dans la première ouverture 16 du premier plot 15.

La première vis 160 est notamment disposée verticalement, alignée selon l'axe Z. La première vis 160 est par exemple perpendiculaire au longeron 103.

Un dispositif 1 du type de celui décrit ci-dessus permet de maintenir un organe fonctionnel dans un véhicule circulant sur toute type de route et dans toutes les conditions de roulage ou d'utilisation, par exemple en conditions normales ou en accélération ou en freinage ou en marche arrière, dans le cas par exemple d'un véhicule se déplaçant autour d'un rond-point ou sur un dos d'âne, etc...

Le dispositif 1 permet de filtrer des vibrations et/ou d'éviter des débattements de l'organe fonctionnel 105, notamment lors d'un freinage ou d'une accélération d'un véhicule 100 ou lorsque le véhicule se déplace notamment dans un virage.

Un avantage d'un dispositif 1 du type de celui décrit ci-dessus réside dans le fait qu'il est démontable. Le dispositif 1 peut facilement être détaché de l'organe fonctionnel 105 et/ou de l'élément structurel 102. Il en résulte qu'une pile à combustible 115 peut facilement être remplacée par une autre pile à combustible dans un même véhicule 100 ou être retirée d'un véhicule 100 pour être réparée puis être à nouveau mise en place une fois réparée dans le véhicule 100 via le dispositif 1.

Un avantage d'un dispositif 1 du type de celui décrit ci-dessus est lié au fait que le support 3 peut être sous la forme d'une seule pièce mécanique.

Un avantage d'un dispositif 1 du type de celui décrit ci-dessus réside dans le fait qu'il est robuste. Des calculs pourront être réalisés pour respecter des conditions de simulation d'un éventuel accident ou des conditions de « crash test ».

Un avantage d'un dispositif 1 du type de celui décrit ci-dessus est lié au fait que le support 3 est compact et présente un encombrement minimal.

Un dispositif 1 du type de celui décrit ci-dessus permet de fixer de façon amovible un organe fonctionnel à un élément structurel d'un véhicule de façon sécurisée.

Un avantage d'un dispositif 1 du type de celui décrit ci-dessus réside dans le fait qu'il permet un maintien solide d'un organe fonctionnel 105 dans un véhicule, notamment dans le compartiment moteur d'un véhicule.

Avantageusement, un seul dispositif 1 du type de celui décrit ci-dessus permet de maintenir l'organe fonctionnel 105 dans un véhicule 100 tout en minimisant les débattements de l'organe fonctionnel 105. L'utilisation d'un autre dispositif 1 du type de celui décrit ci-dessus, notamment à un emplacement de l'organe fonctionnel 105 opposé à celui du dispositif 1, est facultative. Il en résulte un dispositif simple, présentant un coût réduit et une masse réduite, tout en respectant le cahier des charges ou des contraintes acoustiques et/ou vibratoires et/ou de géométrie et/ou de formes et/ou de dimensions et/ou de comportement sur route d'un véhicule.

Un avantage d'un dispositif 1 du type de celui décrit ci-dessus réside dans le fait qu'il permet de réaliser une filtration acoustique et vibratoire.

Un avantage d'un dispositif 1 du type de celui décrit ci-dessus, comprenant un support 3 se présentant notamment sous la forme d'une seule pièce mécanique, réside dans le fait qu'il est simple à relier à un organe fonctionnel et/ou à un élément structurel d'un véhicule. Il en résulte un montage et/ou un démontage simple et rapide d'un tel dispositif 1 ou d'un système 30 ou d'agencement 40 dans un véhicule 100.

Un avantage d'un dispositif 1 du type de celui décrit ci-dessus réside dans le fait qu'il permet de maintenir un organe fonctionnel 105 dans un véhicule 100 via un support 3 notamment sous la forme d'une seule pièce. Il en résulte un nombre de pièces mécaniques réduit d'un tel dispositif. Il en résulte un dispositif simple, présentant un coût réduit et une masse réduite, tout en respectant le cahier des charges ou des contraintes acoustiques et/ou vibratoires et/ou de géométrie et/ou de formes et/ou de dimensions et/ou de comportement sur route d'un véhicule.

Un avantage d'un dispositif 1 du type de celui décrit ci-dessus réside dans une mise en place simple et rapide du dispositif 1, ce qui permet un montage et démontage simple et rapide d'un organe fonctionnel 105 dans un véhicule.

Un avantage d'un dispositif 1 du type de celui décrit ci-dessus réside dans le fait qu'il présente un volume ou un encombrement réduit.

Un mode d'exécution d'un procédé de mise en place d'un dispositif 1 dans un véhicule 100 est décrit ci-après en référence aux figures 3 à 5.

Dans une étape, on fixe le dispositif 1, de façon amovible, à un organe fonctionnel 105 via la deuxième vis 180 et/ou la troisième vis 200.

Dans une étape, on fixe le dispositif 1, de façon amovible, à un élément structurel 102 via la première vis 160.

Les deux étapes peuvent être réalisées dans un ordre quelconque.

De préférence, le dispositif 1 est fixé de façon amovible à l'organe fonctionnel 105 après la mise en place de l'organe fonctionnel 105 dans un véhicule 100. En variante, le dispositif 1 peut être préalablement fixé de façon amovible à l'organe fonctionnel 105, avant l'agencement de l'organe fonctionnel 105 dans un véhicule 100.

Bien que l'invention ait été décrite ci-dessus dans le cas d'une pile à combustible, l'invention s'applique à tout autre organe fonctionnel d'un véhicule qu'un groupe motopropulseur comprenant au moins une pile à combustible, par exemple à un groupe motopropulseur comprenant au moins un moteur thermique ou électrique. Dans ce cas, le dispositif 1 est notamment destiné à filtrer des débattements d'un moteur thermique ou électrique.

Bien que l'invention ait été décrite ci-dessus dans le cas d'un véhicule comprenant une pile à combustible ou à hydrogène, l'invention s'applique à tout type de véhicule, par exemple à un véhicule dont le groupe motopropulseur comprend une autre source d'énergie qu'une pile à combustible.

## Revendications

1. Dispositif (1) pour fixer de façon amovible un organe fonctionnel (105) à un élément structurel (102) d'un véhicule, le dispositif comprenant un support (3), le support (3) comprenant un premier élément annulaire (5) destiné à être fixé à un élément structurel (102) d'un véhicule et un deuxième élément annulaire (7 ; 9) destiné à être fixé à un organe fonctionnel (105) d'un véhicule, le premier élément annulaire (5) s'étendant selon une première direction (D1), le deuxième élément annulaire (7 ; 9) s'étendant selon une deuxième direction (D2 ; D3), le support (3) comprenant en outre un premier bras (21 ; 23) reliant le premier élément annulaire (5) au deuxième élément annulaire (7 ; 9), la première direction (D1) n'étant pas alignée avec la deuxième direction (D2 ; D3).

2. Dispositif selon la revendication 1, dans lequel la première direction (D1) forme un angle d'au moins 45° avec la deuxième direction (D2 ; D3), la première direction (D1) étant notamment perpendiculaire à la deuxième direction (D2 ; D3).

3. Dispositif selon la revendication 1 ou 2, comprenant en outre un premier plot (15) au moins partiellement en un matériau élastique, par exemple un premier silent bloc, disposé au moins partiellement à l'intérieur du premier élément annulaire (5), et un deuxième plot (17 ; 19) au moins partiellement en un matériau élastique, par exemple un deuxième silent bloc, disposé au moins partiellement à l'intérieur du deuxième élément annulaire (7 ; 9).

4. Dispositif selon la revendication 3, dans lequel le premier plot (5) comprend une première ouverture (16) destinée à recevoir une première vis (160) et dans lequel le deuxième plot (17 ; 19) comprend une deuxième ouverture (18) destinée à recevoir une deuxième vis (180).

5. Dispositif selon l'une des revendications précédentes, dans lequel le support (3) comprend en outre un troisième élément annulaire (9 ; 7) destiné à être fixé audit organe fonctionnel (105) d'un véhicule, le troisième élément annulaire (9 ; 7) s'étendant selon une troisième direction (D3 ; D2), et un deuxième bras (23 ; 21) reliant le premier élément annulaire (5) au troisième élément annulaire (9 ; 7), la troisième direction (D3 ; D2) n'étant pas alignée avec chacune des première (D1) et deuxième directions (D2 ; D3), la troisième direction (D3 ; D2) formant notamment un angle d'au moins 45° avec chacune des première (D1) et deuxième directions (D2 ; D3), la troisième direction (D3 ; D2) étant notamment perpendiculaire à la première direction (D1) et à la deuxième direction (D2 ; D3).

6. Dispositif selon la revendication 5, comprenant en outre un troisième plot (19 ; 17) au moins partiellement en un matériau élastique, par exemple un troisième silent bloc, disposé au moins partiellement à l'intérieur du troisième élément annulaire (9 ; 7).

7. Dispositif selon la revendication précédente, dans lequel le troisième plot (19; 17) comprend une troisième ouverture (20) destinée à recevoir une troisième vis (200).

8. Dispositif selon l'une des revendications 5 à 7, dans lequel le deuxième bras (23 ; 21) est perpendiculaire ou sensiblement perpendiculaire au premier bras (21 ; 23).

9. Système (30) comprenant un dispositif (1) selon l'une des revendications 4 à 8 et un organe fonctionnel (105) pour un véhicule, notamment un groupe motopropulseur comprenant au moins une pile à combustible (115), le premier élément annulaire (5) étant destiné à être fixé à un élément structurel (102) d'un véhicule par une première vis (160) destinée à être insérée dans la première ouverture (16) du premier plot (15), le deuxième élément annulaire (7 ; 9) étant fixé à l'organe fonctionnel (105) par une deuxième vis (180 ; 200) insérée dans la deuxième ouverture (18 ; 20) du deuxième plot (17 ; 19), et éventuellement le troisième élément annulaire (9 ; 7) étant fixé à l'organe fonctionnel (105) par une troisième vis (200 ; 180) insérée dans la troisième ouverture (20 ; 18) du troisième plot (19 ; 17).

10. Agencement comprenant un élément structurel (102) pour un véhicule et un dispositif (1) selon l'une des revendications 4 à 8 et/ou un système (30) selon la revendication 9, le premier élément annulaire (5) étant fixé à l'élément structurel (102) par une première vis (160) insérée dans la première ouverture (16) du premier plot (15).

11. Véhicule (100), notamment véhicule automobile, comprenant un dispositif (1) selon l'une des revendications 1 à 8 et/ou un système (30) selon la revendication 9 et/ou un agencement selon la revendication précédente.
